Europäisches Patentamt

European Patent Office

Office européen des brevets

(11) Publication number: **0 241 908**
**B1**

## EUROPEAN PATENT SPECIFICATION

(45) Date of publication of the patent specification:
19.12.90

(51) Int. Cl.⁵: **B01J 3/06**

(21) Application number: **87105506.7**

(22) Date of filing: **14.04.87**

(54) Apparatus for generating superhigh pressure.

(30) Priority: **14.04.86 JP 84170/86**

(43) Date of publication of application:
**21.10.87 Bulletin 87/43**

(45) Publication of the grant of the patent:
**19.12.90 Bulletin 90/51**

(84) Designated Contracting States:
**DE FR GB SE**

(56) References cited:
**GB-A- 1 023 449**
**US-A- 2 867 002**

**PATENT ABSTRACTS OF JAPAN, vol. 10,
no. 280 (C-374)[2336], 24 Sep 1986
THE REVIEW OF SCIENTIFIC INSTRUMENTS, vol. 41,
no. 8, August 1970, pages 1178-1181, New York, US; N.
KAWAI et al.: "The generation of ultrahigh hydrostatic
pressures by a split sphere apparatus"**

(73) Proprietor: Ishikawajima-Harima Heavy Industries Co.,
Ltd., 1-go, 2-ban, 2-chome, Ohtemachi Chiyoda-ku,
Tokyo(JP)

(72) Inventor: Hara, Okitada, 2-2-7-405, Nakane Meguro-ku,
Tokyo(JP)

(74) Representative: Schaumburg, Thoenes & Englaender,
Mauerkircherstrasse 31 Postfach 86 07 48,
D-8000 München 86(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus for generating superhigh pressure, more particularly the means with which the pressure is generated.

Superhigh pressure generating apparatuses for producing diamond, carbide material , and the like are generally known. Pressure generated by such an apparatus can range from tens of thousands to several tens of thousands kg/cm². One type of superhigh pressure generating apparatus, known as the 'belt-type', is equipped with a disk-like cylinder having a hole in the center. A pair of anvils, the ends of which are projected, are respectively directed toward the aforesaid hole from both sides to generate superhigh pressure.

Another type, known as the 'diamond type', has anvils which are arranged in six directions, i.e. upper and lower, front and back, and left and right. These anvils are synchronized toward the center of the cylinder to generate very high pressure.

A third type, known as the 'split-sphere type', has a spherical body which is divided into six or eight sections to form an internal space in its central portion. This internal space is pressed from all directions in order to obtain very high pressure.

The applicant has previously proposed a very high pressure apparatus which is modified over the 'split-sphere type' (Japanese Patent Application No. 225,128/1984).

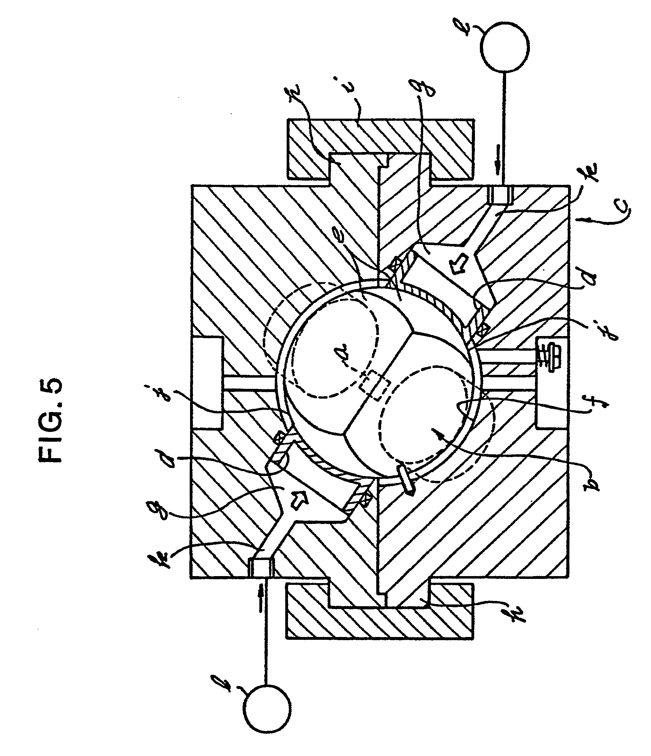

As shown in Fig. 5, this very high pressure apparatus is principally composed of a split sphere b for defining an internal space a in the center thereof, a casing c for accommodating the split sphere b, and a piston d for pressing the split sphere b into the casing c. The split sphere b is an assembly of split moving bodies e in the form of flat-top round-bottom quadrangular pyramids which are obtained when a sphere is equally divided into more than four sections and the tips or the peaks are cut. The split sphere b arrangement has in its center the internal space a defined by the oppositely arranged split moving bodies e in order to accomodate therein an article to be pressed. The split moving bodies e are forced to move inwardly in a diametral direction, uniformly pressing the article from all directions. The casing c, having room inside for accomodating the split sphere, is a cubic body. This casing c consists of an upper and a lower section obtained by horizontally cutting the cubic body so that it can accomodate the split sphere b. Said two sections are recessed spherically so as to provide enough room for the split sphere b in the middle of the casing c. The split moving bodies e, respectively, can move slightly toward the center of the sphere inside said room. Also provided inside the casing c are pressure chambers g which face each other and are contiguous from the recesses f. The center lines of the pressure chambers g are directed toward the center of the split sphere b. The pressure chambers g are formed to correspond to the split moving bodies e, and the split moving bodies e are adapted so that they move inwardly when fluid pressure is applied. Two sections of the casing c have flanges h, respectively, which protrude from the lateral side. Couplings i having a ⌐-shaped cross section are fitted into the flanges h to firmly clamp the split casing c. Hollow cylindrical pistons d are arranged inside the pressure chambers g. Curved head portions at the ends of the pistons d have the same curvature as that of the sphere b and are in contact with the outer surfaces of the split moving bodies e.

Hydraulic pumps l , which are provided outside of the casing c, are connected to the pressure chambers g through an oil passage k. Fluid pressure, supplied from the hydraulic pumps l, acts on the pistons d. The pistons d urge and move the split moving bodies e so that very high pressure can be applied to the article inside the internal space a. It should be noted that the fluid is not limited to oil but other fluids, if they are noncompressive, may also be employed.

The above-described proposals and other conventional superhigh pressure apparatuses have the following drawbacks.

A supply of fluid pressure to the pressure chambers g can be carried out separately and independently from outside the casing c by the hydraulic pumps l or the like. However, the installation of a hydraulic pump l poses the problem that it makes the construction, such as piping, complicated. Since the fluid pressure to be supplied to the pressure chambers g should be of the order of several 1000 kg/cm², it is generally necessary to provide one hydraulic pump l for each pressure chamber g individually. Consequently, the structure of the entire apparatus becomes very complicated and it is necessary to secure a considerable amount of space for the installation. On the other hand, the hydraulic pump generally has a performance of 1000 to 2000 kg/cm². The fluid pressure to be introduced into the pressure chambers g is larger than that, i.e, of the order of several 1000 kg/cm², and therefore, special hydraulic pumps are required. Should a general type of hydraulic pump be used, some kind of technical measures must be taken to secure a high fluid pressure. In such cases, the apparatuses according to the prior art are expensive to manufacture.

In the document "The Review of Scientific Instruments", vol. 41, No. 8, August 1970, p. 1178 to 1179, there is disclosed an anvil-type apparatus having eight pistons. Soft insulator sheets are inserted between the sides of the anvils. The whole spherical assemblage comprised of eight anvils is covered with a pair of thick hemispherical rubber shells and placed in an oil reservoir. When the oil pressure in the reservoir is raised, the insulator sheets are compressed and stretched, causing a progression of the anvils towards the center. In this device the apparatus comprising said eight anvils is totally placed in said oil reservoir so that a considerable amount of space is necessary for the installation of the entire apparatus. Furthermore, to obtain a high pressure, very high pressure forces must be brought into contact with the movable bodies since the area to which the force is supplied is the entire spherical surface of the rubber shell.

From document GB-A 1 023 449 an apparatus is known which comprises a pressure generating means which acts upon the reaction material by displacing the piston upwards with a ring. When the ring meets the plane surface of the blocks, the latter begin to be displaced upwardly in the stationary annulus along the common sliding surface. Therefore, the blocks are mechanically displaced upwardly by the contact of the ring with the plane surface. Even a second embodiment discloses said mechanical contact between the ring and the plane surface.

It is an object of the invention to develop an apparatus identified in the precharacterizing clause of claim 1 which is easily constructed and, therefore, economical to manufacture.

This object will be solved by an apparatus comprising the features of claim 1.

The fluid pressure generating means, provided integrally with the casing, are pressed by the pressing force applied from outside of the casing. High pressure fluid is created simultaneously and introduced into the pressure chambers to thereby move the plurality of moving bodies, thus applying very high pressure to the intended article.

The provision of such a fluid pressure generating means eliminates the need for the separate and independent installation of a hydraulic pump and overcomes the problem caused by insufficient pump performance when a standard hydraulic pump is used.

Further embodiments of the invention are disclosed in the subclaims 2 to 9.

The invention will be further described with reference to the drawings in which

Fig. I is a side cross-sectional view showing a preferred embodiment of the present invention;

Fig. 2 is a side cross-sectional view illustrating a second preferred embodiment of the present invention;

Fig. 3 is a side cross-sectional view depicting a a third preferred embodiment of the present invention;

Fig. 4 is an enlarged cross-sectional view of part A in Fig. 3; and

Fig. 5 is a side cross-sectional view showing a device already proposed.

In the drawings, only the split-sphere type superhigh pressure apparatus, which was introduced in the above-described proposed device, is depicted. However, it should be noted that the invention will be applied also to the superhigh pressure apparatus of the belt-type, diamond-type, or others.

In Fig. I a superhigh pressure apparatus is shown which is principally composed of a plurality of movable bodies 3 arranged opposite to each other so as to define an internal space 2 for receiving an article to be pressed and a casing 5 having a spherical compartment 20 for said plurality of movable bodies 3 and having pressure chambers 4 for said movable bodies 3 to receive fluid pressure F in order to let said bodies 3 move inwardly.

More specifically, said apparatus shown in Fig. I comprises six split movable bodies 3 assembled to form a split sphere I pressing an article inside the internal space 2 in the diametral direction. The casing 5 has the spherical compartment 20 for accomodating the split movable bodies 3 and the pressure chambers 4 which are provided for pushing the split movable bodies 3 inwardly.

The pressure chambers 4 are defined and formed so as to face the surface 6 as if they were attached to the split moving bodies 3 inside the casing 5. In the pressure chambers 4 pistons 7 are provided on which fluid pressure F is exerted to move the split movable bodies 3 inwardly.

The casing 5 is divided into an upper and a lower section so that the split movable bodies 3, or the like, can be received in said compartment 20. The casing 5 may be composed by joining a pair of split casing bodies 22, 23 at their surfaces 5a. The casing 5 is integrally equipped with fluid pressure generating means 2I in which high fluid pressure, which is to be supplied to the pressure chambers 4, is generated by pressing forces applied from outside of the casing 5. The split casing bodies 22 and 23, respectively, have rams II which protrude from the outer surfaces opposite to the joining surfaces 5a. Sleeve-like cylinders I2 are pro vided with the rams II so as to encircle the rams peripherally. These cylinders I2 are slidable axially against the rams II. Above the rams II, disk-like head covers I3 having a seal ring I4 are provided on the openings I2a of the cylinders I2. The head covers I3 close the openings I2a of the cylinders I2 to define spaces I0 between the rams II wherein fluid pressure is generated. Fluid, such as oil, is also sealed inside the fluid pressure forming spaces I0. Oil passages I5 bored in the casing 5 are provided between said spaces I0 and the pressure chambers 4. The oil passages I5 serve for introducing fluid pressure F generated inside said spaces I0 into the pressure chambers 4.

In the present embodiment, six split movable bodies 3 and six pressure chambers 4 are provided, and therefore, in each section of the casing 5 three oil passages I5 connect said spaces I0 to three pressure chambers 4.

The heads IIa of the rams II are designed so that when fluid pressure F is generated by pressing force, the resulting force of fluid pressure F is allowed to act vertically on the plane of the joined surfaces 5a of the split casing bodies 22, 23 bringing them into tight contact. The top planes IIa of the rams II are respectively parallel to the joined surfaces 5a.

With the above-described arrangement, high fluid pressure F may be generated when the head covers I3 of the fluid pressure generating means 2I are clamped by pressing means such as a press to apply pressing force to the fluid pressure forming spaces I0. The fluid is introduced into the pressure chambers 4 through the oil passages I5 to move the split movable bodies 3 inwardly under high pressure, thereby applying superhigh pressure to the article.

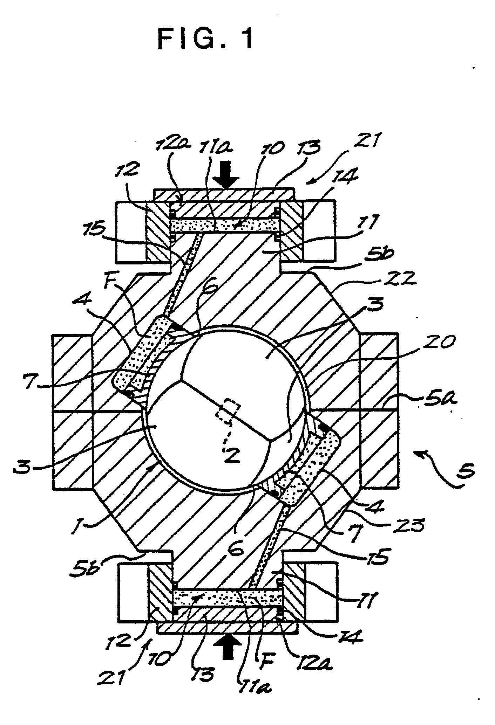

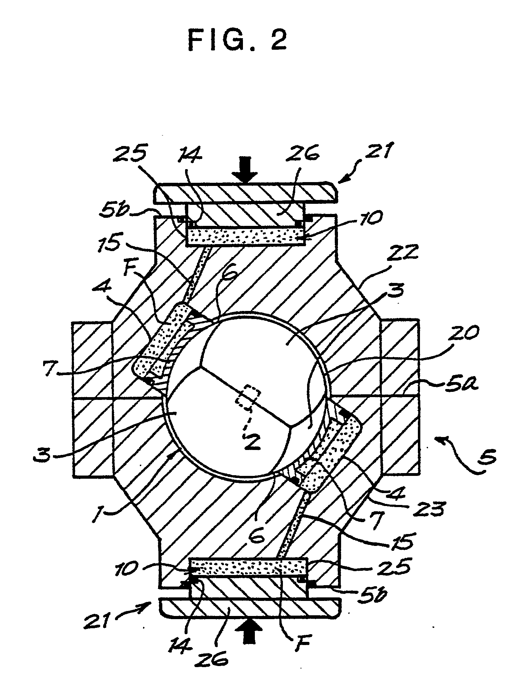

In Fig. 2, the casing 5 is integrally formed in its outer surface 5b with cylinders 25 which are shaped by recessing from the outer surface Sb and in which fluid F is sealed. Within the cylinders 25 rams 26 are provided which are axially slidable. When the pressing force is applied to the rams 26, the fluid F sealed in the cylinders 25 takes over increased pressure and may be introduced into the chambers 4.

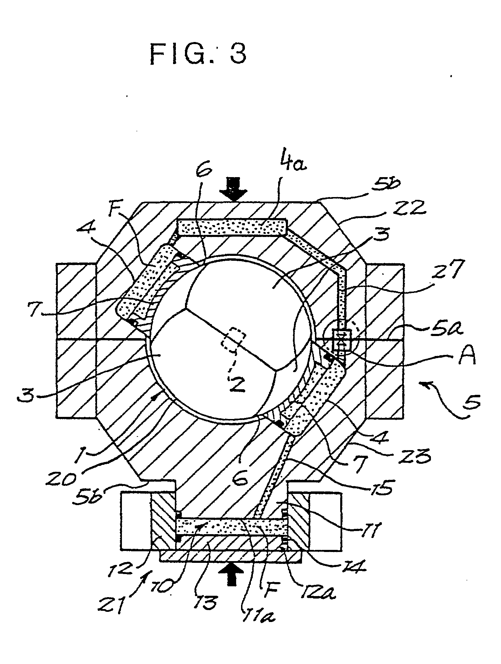

In Fig. 3, a fluid pressure generating means 21 is integrally provided with one of the pair of split casing bodies 23. The chambers 4, into which fluid pressure F is introduced from the fluid pressure generating means 21, are connected with each other by a passag4e 27 bored inside the casing 5. In this case, a header 4a is formed in the interior of the split casing body 22 which is the one without the fluid pressure generating means 21. The chamber 4 located in the casing body 22 is connected to the header 4a The other chamber 4 inside the counterpart 23 is connected to the pressure generating means 21. The header 4a serves to balance the fluid pressure F propagating from the latter chamber 4. In this embodiment the passage 27 penetrates the contact plane of the joined surfaces 5a of the split casing bodies 22, 23.

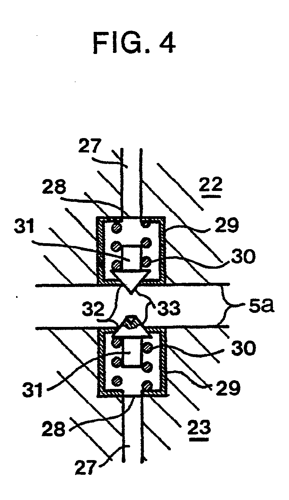

A valving system is provided at this contact plane as shown in Fig. 4 and described below which cuts off the passage 27 in order to prevent leakage of oil when the split casing bodies 22, 23 are separated, and opens the passage 27 when they are joined. In the openings 28 of the passages 27 which open in the direction of the joined surfaces 5a, valve bodies 31 are provided being urged by springs 30 into sleeve-like holders 29. Each valve body 31 tightly closes an opening 32 of the holder 29 to cut off the passage 27. In the case where the joined surfaces 5a are brought into contact with each other, head portions 33 of the valve bodies 3l are moved away from each other against the spring 30, and the holes 32 of the holders 29 are opened and therewith the passage 27 also opens.

In the present invention, since the fluid pressure generating means 2l is integrated with the casing 5, the desired fluid pressure F may be secured by pressing by the pressing means, such as a press, which is installed outside of the casing 5.

As described above, the apparatus can be one unit which contains a pressure generating means integrated with the casing 5, and thus it is not necessary to provide a piping installation outside of the casing 5 or to operate hydraulic pumps which are required for the apparatus according to the prior art. Hence, equipment and operation are simplified. Moreover, a press device or the like generally has a considerable pressing ability so that it is not necessary to use a hydraulic pump which is unsatisfactory in obtaining a higher pressure, or to use an expensive special hydraulic pump. Consequentially, it is possible to generate very high pressure as desired while also restraining an increase in cost.

The case where the same pressing force is applied to the split moving bodies should now be considered. If considerably high fluid pressure F can be secured by a press device or the like, it is possible to make the piston 7 smaller than in the case where only lower pressure is obtained. Thus, the piston 7 may be miniaturized as well as the entire system. Furthermore, since the head lla of the ram ll is designed so that the resulting force of the fluid pressure F acting thereon is applied vertically to the joined surfaces 5a, the contact between the joined surfaces 5a of the casing 5 may be secured by the fluid pressure F generated by actuation of the press device.

Since the fluid pressure generating means is integrally provided with the casing in order to introduce fluid pressure into the pressure chambers upon application of pressing force from the outside, the apparatus may be built as a single unit, i.e., it is not necessary to install a separate hydraulic pump or to improve the ability of the hydraulic pump. Thus, equipment as well as operation may be simplified and costs are kept at a minimum.

## Claims

1. An apparatus for generating superhigh pressure comprising a plurality of movable bodies (3) being arranged opposite to each other so as to define an internal space (2) for receiving an article to be pressed, and being movable within a casing (5) from outside toward the inside, the casing (5) having room inside for said plurality of movable bodies (3) and also having pressure space contiguous to said room for said movable bodies (3), and fluid pressure generating means (21) to generate fluid pressure (F) to be supplied onto said movable bodies (3) by a pressing force applied from outside of the casing (5), characterized in that said pressure space is formed by pressure chambers (4), each pressure chamber (4) being allotted to one movable body (3) and having fluid connection with said fluid pressure generating means (21) in order to introduce fluid pressure (F) for moving said bodies (3) inwardly and that said fluid pressure generating means (21) is integrally provided with said casing (5).

2. The apparatus of claim 1, wherein said pressure generating means (21) comprises at least one ram-cylinder-device (11, 12; 25, 26) filled with fluid, being sealed to outside and protruding from said casing (5), said pressing force being applied to said ram-cylinder-device (11, 12; 25, 26).

3. The apparatus of claim 1 or 2 , wherein said fluid pressure generating means (21) comprise cylinders (25) being formed by recessing the casing (5) from its outer surface and containing the fluid, and rams (26) being slidable inside said cylinders (25) and pressing the fluid sealed therein.

4. The apparatus of any one of the foregoing claims, wherein said plurality of movable bodies (3) consist of six split spherical bodies obtained by equally dividing a sphere.

5. The apparatus of any one of the foregoing claims, wherein said pressure spaces (4) contain pistons (7) in contact with the outside of said movable bodies (3) and are also provided so as to act on said pistons (7), pushing said movable bodies (3) inwardly.

6. The apparatus of any one of the foregoing claims, wherein said casing (5) is constructed by joining a pair of split casing bodies (22, 23) such that said room can accommodate said movable bodies (3).

7. The apparatus of claim 6, wherein said fluid pressure generating means (21) are provided integrally with said pair of split casing bodies (22, 23) at the outer surface (6) which is the other side of the contact plane (5a) of the casing (5).

8. The apparatus of claim 6, wherein said fluid pressure generating means (21) are provided integral with one (23) of said pair of split casing bodies (22, 23), and the pressure spaces (4) receiving fluid pressure (F) from said fluid pressure generating means (21) 35 are connected to each other by a pressure conduit (27, 4a) formed inside said casing (5).

9. The apparatus of any one of claims 6 to 8, wherein said pair of split casing bodies (22, 23) are brought into tight contact with each other at the contact plane (5a) by the fluid pressure (F) generated by a pressing force.

## Patentansprüche

1. Einrichtung zum Erzeugen überhohen Drucks, mit mehreren beweglichen Körpern (3), die einander gegenüberliegend einen Innenraum (2) zur Aufnahme eines unter Druck zu setzenden Gegenstands bilden und in einem Gehäuse (5) von außen nach innen beweglich sind, wobei das Gehäuse (5) im Inneren Platz für die beweglichen Körper (3) und daran angrenzenden Druckraum hat, und mit Druckerzeugungsmitteln (21) zum Erzeugen eines den beweglichen Körpern (3) zuzuführenden Fluiddrucks (F) durch eine von der Außenseite des Gehäuses (5) her einwirkende Druckkraft, dadurch gekennzeichnet, daß der Druckraum durch Druckkammern (4) gebildet ist, die jeweils einem beweglichen Körper (3) zugeordnet sind und in Fluidverbindung mit den Druckerzeugungsmitteln (21) stehen, um den Fluiddruck (F) zur nach innen gerichteten Bewegung der Körper (3) zuzuführen, und daß die Druckerzeugungsmittel (21) mit dem Gehäuse (5) integral verbunden sind.

2. Einrichtung nach Anspruch 1, dadurch gekennzeichnet, daß die Druckerzeugungsmittel (21) zumindest eine mit Fluid gefüllte Kolben-Zylinder-Vorrichtung (11, 12; 25, 26) umfassen, die nach außen dicht ist und von dem Gehäuse (5) absteht, und daß die Druckkraft dieser Kolben-Zylinder-Vorrichtung (11, 12; 25, 26) zugeführt wird.

3. Einrichtung nach Anspruch 1 oder 2, dadurch gekennzeichnet, daß die Druckerzeugungsmittel (21) Zylinder (25) umfassen, die durch Aussparen des Gehäuses (5) von außen her gebildet sind und das Fluid enthalten, und daß Kolben (26) in den Zylindern (25) verschiebbar sind und das darin abgeschlossene Fluid unter Druck setzen.

4. Einrichtung nach einem der vorhergehenden Ansprüche, dadurch gekennzeichnet, daß die beweglichen Körper (3) sechs geteilte sphärische Körper sind, die sich aus der gleichmäßigen Aufteilung einer Kugel ergeben.

5. Einrichtung nach einem der vorhergehenden Ansprüche, dadurch gekennzeichnet, daß die Druckkammern (4) Kolben (7) in Kontakt mit der Außenseite der beweglichen Körper (3) enthalten und so angeordnet sind, daß sie auf die Kolben (7) einwirken und damit die beweglichen Körper (3) nach innen drücken.

6. Einrichtung nach einem der vorhergehenden Ansprüche, dadurch gekennzeichnet, daß das Gehäuse (5) durch Verbinden zweier geteilter Gehäusekörper (22, 23) so gebildet ist, daß sein innerer Platz den beweglichen Körpern (3) angepaßt ist.

7. Einrichtung nach Anspruch 6, dadurch gekennzeichnet, daß die Druckerzeugungsmittel (21) integral mit den beiden geteilten Gehäusekörpern (22, 23) an deren Außenseite (6) ausgebildet sind, die der Kontaktebene (5a) des Gehäuses (5) abgewandt ist.

8. Einrichtung nach Anspruch 6, dadurch gekennzeichnet, daß die Druckerzeugungsmittel (21) integral mit einem (23) der geteilten Gehäusekörper (22, 23) ausgebildet sind, und daß die den Fluiddruck (F) von den Druckerzeugungsmitteln (21) erhaltenden Druckräume (4) miteinander über eine im Inneren des Gehäuses (5) ausgebildete Druckleitung (27, 4a) verbunden sind.

9. Einrichtung nach einem der Ansprüche 6 bis 8, dadurch gekennzeichnet, daß die beiden geteilten Gehäusekörper (22, 23) an der Kontaktebene (5a) durch den mit einer Druckkraft erzeugten Fluiddruck (F) in festen Kontakt gebracht sind.

## Revendications

1. Appareil pour la génération d'une pression extrêmement élevée comprenant une pluralité de corps déplaçables (3) arrangés à l'opposé les uns des autres de façon à définir un volume interne (2) pour la réception d'un article à comprimer, et étant déplaçables à l'intérieur d'une enveloppe (5) à partir de l'extérieur vers l'intérieur, l'enveloppe (5) ayant une place à l'intérieur pour cette pluralité de corps déplaçables (3) et ayant aussi un espace de pression contigu à ladite place pour les corps déplaçables (3), et des moyens (21) de création d'une pression de fluide pour engendrer une pression de fluide (F) à fournir aux corps déplaçables (3) à partir d'une force pressante appliquée de l'extérieur de l'enveloppe (5), caractérisé en ce que l'espace de pression est constitué par des chambres de pression (4), chaque chambre de pression (4) étant affectée à un corps déplaçable (3) et ayant une liaison de transmission de fluide avec les moyens (21) de création d'une pression de fluide afin de transmettre la pression de fluide (F) pour le déplacement des corps (3) vers l'intérieur et en ce que les moyens (21) de création d'une pression de fluide font partie intégrante de l'enveloppe (5).

2. Appareil de la revendication 1 dans lequel les moyens (21) de création d'une pression comprennent au moins un vérin (11, 12; 25, 26) à piston et à cylindre rempli de fluide, scellé vis-à-vis de l'extérieur et en saillie à partir de l'enveloppe (5), ladite force pressante étant appliquée à ce vérin (11, 12; 25, 26).

3. Appareil de la revendication 1 ou 2 dans lequel les moyens (21) de création d'une pression de fluide comprennent des cylindres (25) formés par des évidements pratiqués dans l'enveloppe (5) à partir de sa surface extérieure et contenant le fluide, et des pistons (26) montés pour coulisser dans les cylindres (25) et comprimer le fluide contenu hermétiquement à l'intérieur.

4. Appareil de l'une quelconque des revendications précédentes dans lequel la pluralité de corps déplaçables (3) consiste en six corps d'une sphère divisée obtenus par une division égale d'une sphère.

5. Appareil selon l'une quelconque des revendications précédentes dans lequel les espaces de pression (4) contiennent des pistons (7) en contact avec l'extérieur des corps déplaçables (3) et sont agencés aussi de manière à agir sur ces pistons (7) en poussant les corps déplaçables (3) vers l'intérieur.

6. Appareil de l'une quelconque des revendications précédentes dans lequel l'enveloppe (5) est construite par l'assemblage d'une paire de corps (22, 23) d'une enveloppe fendue telle que ladite place peut s'accommoder des corps déplaçables (3).

7. Appareil de la revendication 6 dans lequel les moyens (21) pour créer une pression de fluide font partie intégrante de la paire de corps (22, 23) d'une enveloppe fendue, à la surface extérieure (6) qui est de l'autre côté du plan de joint (5a) de l'enveloppe (5).

8. Appareil de la revendication 6 dans lequel les moyens (21) de création d'une pression de fluide font partie intégrante d'un corps (23) des paires de corps (22, 23) d'une enveloppe fendue, et les espaces de pression (4) recevant la pression de fluide (F) des moyens (21) de création d'une pression de fluide sont raccordés lesuns aux autres par un conduit de pression (27, 4a) formé à l'intérieur de l'enveloppe (5).

9. Appareil de l'une quelconque des revendications 6 à 8 dans lequel les corps de la paire de corps (22, 23) d'une enveloppe fendue sont mis en contact étanche l'un avec l'autre dans le plan de joint (5a) par la pression de fluide (F) créée par une force pressante.

# FIG. 1

EP 0 241 908 B1

## FIG. 2

# FIG. 3

FIG. 4

# FIG. 5

EP 0 241 908 B1